# EUROPÄISCHE PATENTSCHRIFT

(11) **EP 1 215 404 B1**
(45) Veröffentlichungstag und Bekanntmachung des Hinweises auf die Patenterteilung: **06.08.2008**
(21) Anmeldenummer: 01129225.7
(22) Anmeldetag: 10.12.2001
(51) Int. Cl.: F16B 37/04

(54) **Befestigungsvorrichtung für ein an einer Platte zu befestigendes Bauteil**
Fastening device for an element to be fastened to a panel
Dispositif de fixation pour fixer un élément sur un panneau

(30) Priorität: 15.12.2000 DE 20021221 U
(43) Veröffentlichungstag der Anmeldung: 19.06.2002
(73) Patentinhaber: EJOT VERBINDUNGSTECHNIK GmbH & Co. KG, 57334 Bad Laasphe (DE)
(72) Erfinder: Pinzl, Wilfried, Dr., 99897 Tambach-Dietharz (DE)
(74) Vertreter: Bardehle, Heinz

(56) Entgegenhaltungen:
- EP-A- 0 674 082
- DE-U- 9 318 122
- DE-U- 29 805 045
- FR-A- 2 680 208
- US-A- 4 108 407
- US-A- 4 906 152
- US-A- 6 059 502

## Beschreibung

Die Erfindung bezieht sich auf eine Befestigungsvorrichtung für ein an einer Platte zu befestigendes Bauteil, das gegenüber der Platte dreidimensional justierbar ist, mit einer in einen Durchbruch der Platte eingesteckten und gegenüber der Platte verriegelten Hülse, in die ein Rohrstück mit einem Durchgangsloch eingeschraubt ist, in dem mit erheblichem Spiel zur radialen Justierung eine Schraube eingesetzt ist, die sich mit ihrem Kopf an dem einen Ende des Rohrstücks abstützt und mit ihrem Gewindeteil das Bauteil trägt, das sich an das andere Ende des zur axialen Justierung wahlweise weit eingeschraubten Rohrstücks anlegt.

Eine derartige Befestigungsvorrichtung ist in der US-Patentschrift 4,108,407 offenbart. Bei der bekannten Befestigungsvorrichtung ist die Platte mit der Hülse fest verbunden, und zwar durch besondere Befestigungsmittel in einer speziell hierfür gestalteten Wabenplatte.

Der Erfindung liegt die Aufgabe zugrunde, bei einer Befestigungsvorrichtung der eingangs dargestellten Bauweise die Verbindung von Platte und Hülse so zu gestalten, dass zur Erleichterung der Anbringung der Befestigungsvorrichtung die Hülse sich erst dann mit der Platte fest verbindet, wenn das Rohrstück in die Hülse eingeschoben wird. Erfindungsgemäß geschieht dies dadurch, dass das Rohrstück mit seiner dem Bauteil zugewandten Seite die mit einem Innenkonus versehene Hülse zur Verklemmung gegenüber der Platte auseinander drückt. Beim Eindrehen des Rohrstücks wird diese auseinander gedrückt, womit sich die gewünschte Verklemmung der Hülse gegenüber der Platte ergibt, die dann intensiviert wird, wenn die das Rohrstück durchsetzende Schraube angezogen wird.

Zweckmäßig gestaltet man hierzu das Rohrstück derart, dass es an seiner dem Bauteil zugewandten Seite einen gewindefreien Bereich aufweist. Für die Verschraubung von Hülse und Rohrstück wird zweckmäßig das Rohrstück mit einem selbstfurchenden Außengewinde versehen.

In den Figuren ist ein Ausführungsbeispiel der Erfindung dargestellt. Es zeigen:
- Figur 1: einen Längsschnitt durch die Befestigungsvorrichtung mit zunächst unvollständig in die Hülse eingeschraubtem Rohrstück,
- Figur 2: die Befestigungsvorrichtung mit etwa 2/3 seiner Länge eingeschraubtem Rohrstück in einer mittleren Position der Schraube,
- Figur 3: die Anordnung gemäß Figur 2 mit vollständig in die Hülse eingeschraubtem Rohrstück,
- Figur 4: die gleiche Anordnung mit seitlich radial gegenüber dem Durchgangsloch versetzter Schraube,
- Figur 5: den Durchbruch in der Platte,
- Figur 6: einen Schnitt längs der Linie VI - VI aus Figur 3 zur Darstellung der Verriegelung der Hülse gegenüber der Platte.

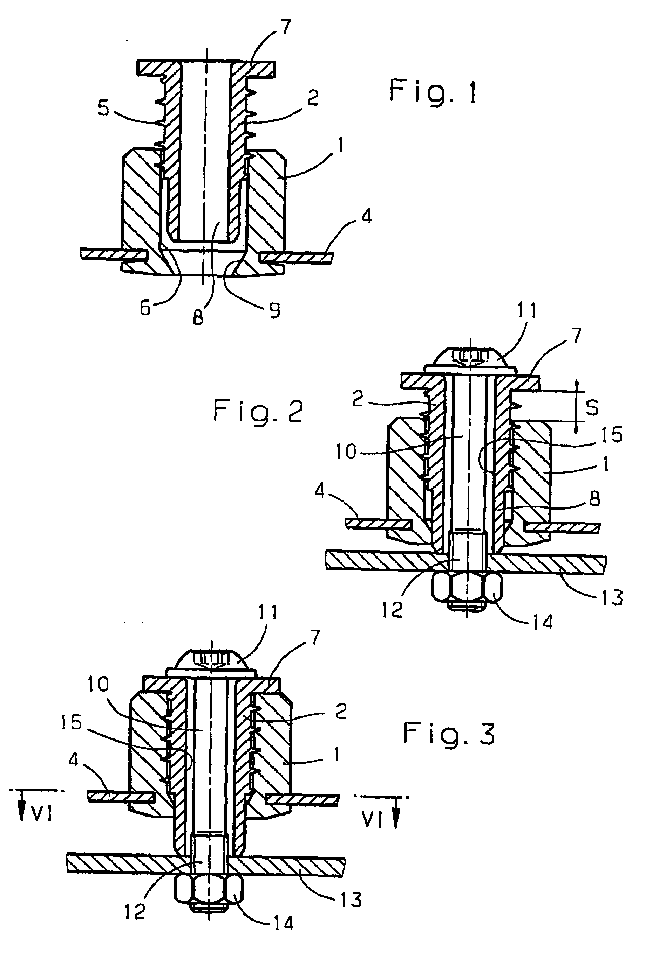

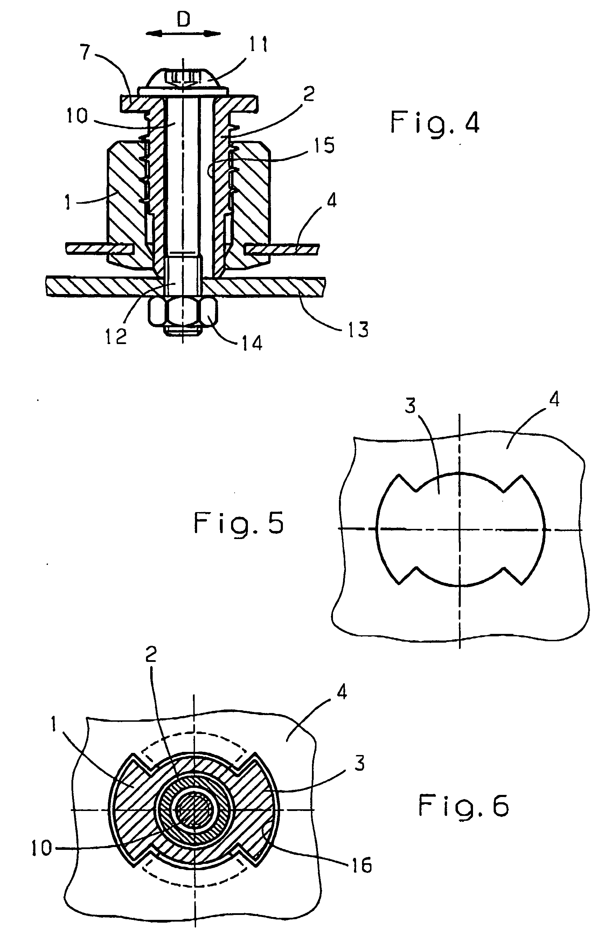

In der Figur 1 ist die Befestigungsvorrichtung mit der Hülse 1 und dem Rohrstück 2 dargestellt, wobei das Rohrstück 2 im zunächst noch unvollständig in die Hülse 1 eingeschraubter Lage gezeigt ist. Die Hülse 1 ist in ein Durchgangsloch 3 (siehe Figur 5 und 6) der Platte 4 eingesetzt. Das Rohrstück 2 besitzt das Außengewinde 5, mit dem sich das Rohrstück 2 selbstfurchend in die Bohrung 6 der Hülse einschrauben läßt. Das Rohrstück 2 besitzt an seinem oberen Ende den Flansch 7, der, wie aus Figur 3 ersichtlich, einen Anschlag bei voll in die Hülse 1 eingedrehtem Rohrstück 2 bildet. Darüber hinaus dient der Flansch 7 zum Ansetzen eines Werkzeuges zum Eindrehen des Rohrstücks 2 in die Hülse 1, wozu z.B. ein Außen- oder ein Innensechskant dienen kann. Das Rohrstück 2 ist weiterhin an seinem dem Flansch 7 abgewandten Ende mit dem gewindefreien Bereich 8 versehen, der mit dem Innenkonus 9 der Hülse 1 zusammenwirkt. Beim weiteren Eindrehen des Rohrstücks 2 in die Hülse 1 drückt der Bereich 8 den Innenkonus 9 auseinander, womit sich eine Verklemmung der Hülse 1 gegenüber der Platte 4 ergibt. Um dem betreffenden Teil der Hülse 1 die hierfür erforderliche Flexibilität zu geben, kann man diese im Bereich des Innenkonus 9 mit Radialschlitzen versehen, die das Auseinanderspreizen des betreffenden Teils der Hülse 1 erleichtern.

Figur 2 zeigt die Befestigungsvorrichtung gemäß Figur 1 mit gegenüber der Darstellung in Figur 1 weiter eingedrehtem Rohrstück 2. Dabei zeigt Figur 2 die Befestigungsvorrichtung in einer Lage, in der das Rohrstück 2 gerade so weit in die Hülse 1 eingeschraubt ist, daß das Rohrstück 2 mit seiner dem Flansch 7 abgewandten Seite gerade über die dem Flansch 7 abgewandte Seite der Hülse 1 hinausragt.

Einen Vergleich der Figur 2 mit der Figur 3 zeigt, daß für das Eindrehen des Rohrstücks 2 in die Hülse 1 ein Spielraum S besteht, der für die axiale Justierung der Befestigungsvorrichtung zur Verfügung steht.

Gemäß Figur 2 ist in das Rohrstück 2 die Schraube 10 eingesetzt, die mit ihrem Kopf 11 sich gegen den Flansch 7 anlegt. Das Gewindeteil 12 der Schraube 10 ist in das an der Platte 4 zu befestigende Bauteil 13 eingesteckt und in die Mutter 14 eingedreht, durch die das Bauteil 13 an das betreffende Ende des Rohrstücks 2 angedrückt wird. Damit ergibt sich die Befestigung des Bauteils 13 über die dargestellte Befestigungsvorrichtung an der Platte 4.

In der Figur 3 ist die Befestigungsvorrichtung gemäß Figur 2 in einer abgewandelten Position dargestellt, und zwar ist gemäß Figur 3 das Rohrstück 2 bis zum Anliegen des Flansches 7 an der Hülse 1 in diese eingeschraubt. Damit nimmt das Rohrstück 2 gegenüber der Darstellung in Figur 2 die entgegengesetzte Extremlage ein, d.h. der in der Figur 2 dargestellte Justierabstand S ist bei der Lage gemäß Figur 3 auf den Wert 0 verringert. Bei einem Vergleich der Figuren 2 und 3 ergibt sich ohne weiteres, daß durch das jeweils unterschiedlich tiefe Eindrehen des Rohrstücks 2 in die Hülse 1 sich eine nähere oder weiter entfernte Position des Bauteils 13 in Bezug auf die Platte 4 ergibt, wodurch also eine in Bezug auf die Schraube 10 gegebene axiale Justiermöglichkeit herbeigeführt ist, die natürlich auch eine Lage des Rohrstücks 2 gegenüber der Hülse 1 ermöglicht, in der sich das Rohrstück 2 etwa in einer Mittellage zwischen den dargestellten Lagen in Figur 2 und 3 befindet.

In den Figuren 2 und 3 ist die Schraube 10 jeweils zentralsymmetrisch in dem Durchgangsloch 15 der Hülse 2 eingezeichnet. In der Figur 4 ist eine demgegenüber radial verschobene Lage der Schraube 10 dargestellt, in der die Schraube 10 das durch die Größe des Durchgangslochs 15 gegebenem Spiel praktisch vollständig ausnutzt. Das Spiel ist durch den oberhalb des Kopfes 11 dargestellten Doppelpfeil D angedeutet. Dieses Spiel der Schraube 10 in dem Durchgangsloch 15 des Rohrstücks 2 gibt der Schraube 10 das erforderliche radiale Spiel, gemäß dem sich das Bauteil 13 jeweils entsprechend verschoben in Bezug auf die Platte 4 an dieser befestigen läßt.

In Figur 5 ist die Platte 4 allein mit dem Durchbruch 3 dargestellt, der aufgrund seiner unrunden Form eine Verriegelung der Hülse 1 an der Platte 4 ermöglicht. Hierzu besitzt die Hülse 1, wie in Figur 6 dargestellt, eine dem Durchgangsloch 3 angepaßte Kontur 16, die es ermöglicht, die Hülse 1 in richtiger Lage zu dem Durchgangsloch 3 in die Platte 4 einzustecken und danach gegenüber der Platte 4 etwa um 90° zu verdrehen, womit dann die Verriegelung der Hülse 1 gegenüber der Platte 4 herbeigeführt ist.

## Patentansprüche

1. Befestigungsvorrichtung für ein an einer Platte (4) zu befestigendes Bauteil (13), das gegenüber der Platte (4) dreidimensional justierbar ist, mit einer in einen Durchbruch (3) der Platte (4) eingesteckten und gegenüber der Platte verriegelten Hülse (1), in die ein Rohrstück (2) mit einem Durchgangsloch (15) eingeschraubt ist, in dem mit erheblichem Spiel zur radialen Justierung eine Schraube (10) eingesetzt ist, die sich mit ihrem Kopf (11) an dem einen Ende des Rohrstücks abstützt und mit ihrem Gewindeteil (12) das Bauteil (13) trägt, das sich an das andere Ende des zur axialen Justierung wahlweise weit eingeschraubten Rohrstücks (2) anlegt, **dadurch gekennzeichnet, dass** das Rohrstück (2) mit seiner dem Bauteil (13) zugewandten Seite die mit einem Innenkonus (9) versehene Hülse (1) zur Verklemmung gegenüber der Platte (4) auseinander drückt.

2. Befestigungsvorrichtung nach Anspruch 1, **dadurch gekennzeichnet, dass** das Rohrstück (2) an seiner dem Bauteil (4) zugewandten Seite einen gewindefreien Bereich (8) aufweist.

3. Befestigungsvorrichtung nach Anspruche 1 oder 2, **dadurch gekennzeichnet, dass** das Rohrstück (2) ein selbstfurchendes Außengewinde (5) trägt.

## Claims

1. Fastening device for a component (13) to be fastened to a panel (4) and three-dimensionally adjustable relative to the panel (4), comprising a sleeve (1) inserted into an opening (3) in the panel (4) and locked relative to the panel, a tubular piece (2) with a through hole (15) being screwed into the sleeve and a screw (10) being inserted with considerable play into the through hole for radial adjustment, the screw being supported via its head (11) against one end of the tubular piece and via its threaded part (12) supporting the component (13) bearing against the other end of the tubular piece (2) screwed in to the extent required for axial adjustment, **characterised in that**, via its side directed towards the component (13), the tubular piece (2) forces the sleeve (1) provided with an inner cone (9) apart in order to lock it in position relative to the panel (4).

2. Fastening device according to claim 1, **characterised in that** the tubular piece (2) is provided on its side directed towards the component (13) with a thread-free region (8).

3. Fastening device according to claim 1 or claim 2, **characterised in that** the tubular piece (2) has a self-tapping external thread (5).

## Revendications

1. Dispositif de fixation pour un élément de construction (13) qui est à fixer sur une plaque (4) et qui est ajustable dans les trois dimensions par rapport à la plaque (4), comprenant un manchon (1) qui est inséré dans un passage (3) de la plaque et verrouillé par rapport à la plaque et dans lequel est vissée une pièce tubulaire (2) pourvue d'un trou débouchant (15) dans lequel est introduite, avec un ample jeu d'ajustement radial, une vis (10) qui, par l'intermédiaire de sa tête (11), prend appui sur une des extrémités de la pièce tubulaire et, par l'intermédiaire de sa partie filetée (12), porte l'élément de construction (13), lequel est appliqué contre l'autre extrémité de la pièce tubulaire (2) optionnellement vissée en profondeur pour l'ajustement axial, **caractérisé en ce que**, par l'intermédiaire de son côté tourné vers l'élément de construction (13), la pièce tubulaire (2) écarte le manchon (1) pourvu d'un cône intérieur (9) pour le bloquer par rapport à la plaque (4).

2. Dispositif de fixation selon la revendication 1, **caractérisé en ce que**, sur son côté tourné vers l'élément de construction (4), la pièce tubulaire (2) comporte une zone non filetée (8).

3. Dispositif de fixation selon les revendications 1 ou 2, **caractérisé en ce que** la pièce tubulaire (2) porte un filetage extérieur autotaraudeur (5).
